# EUROPÄISCHE PATENTSCHRIFT

(11) **EP 2 312 987 B1**
(45) Veröffentlichungstag und Bekanntmachung des Hinweises auf die Patenterteilung: **05.06.2019**
(21) Anmeldenummer: 09780592.3
(22) Anmeldetag: 15.07.2009
(51) Int. Cl.: A47L 15/00, A47L 15/42, D06F 35/00, D06F 39/00

(54) **WASSERFÜHRENDES HAUSHALTSGERÄT, INSBESONDERE GESCHIRRSPÜL- ODER WASCHMASCHINE**
WATER-CONDUCTING HOUSEHOLD APPLIANCE, IN PARTICULAR DISHWASHER OR WASHING MACHINE
APPAREIL ÉLECTROMÉNAGER À CIRCULATION D'EAU, NOTAMMENT LAVE-VAISSELLE OU LAVE-LINGE

(30) Priorität: 23.07.2008 DE 102008040653
(43) Veröffentlichungstag der Anmeldung: 27.04.2011
(73) Patentinhaber: BSH Hausgeräte GmbH, 81739 München (DE)
(72) Erfinder: HEISELE, Bernd, 89567 Sontheim (DE); MUTSCHLER, Christian, 89429 Bachhagel (DE); RIEGER, Roland, 73492 Rainau (DE)
(86) Internationale Anmeldenummer: PCT/EP2009/059018
(87) Internationale Veröffentlichungsnummer: WO 2010/010012

(56) Entgegenhaltungen:
- EP-A- 0 165 139
- EP-A- 0 669 097
- EP-A- 0 800 785
- EP-A- 0 911 438
- WO-A-2005/063109
- DE-A1- 3 901 169
- DE-A1-102004 048 091
- US-A- 4 624 118

## Beschreibung

Die Erfindung betrifft ein wasserführendes Haushaltsgerät, insbesondere eine Geschirrspül- oder Waschmaschine nach dem Oberbegriff des Patentanspruches 1.

Bei wasserführenden Haushaltsgeräten ist die Reduzierung des Wasser- und Energieverbrauches von großer Bedeutung. So kann die Energiereduzierung beispielhaft durch die Absenkung der Prozess-Temperaturen realisiert werden. Eine Wasserreduzierung kann Verwendung eines sogenannten Flottenspeichers erfolgen. Hierzu wird z.B. im Fall einer Geschirrspülmaschine Klarspülwasser von einem Spülgang bis zum nächsten Spülgang im Flottenspeicher deponiert und zum Vorspülen des Spülgutes in der Geschirrspülmaschine verwendet.

Aus der WO 2005/063109 A1 ist eine Geschirrspülmaschine mit einer Steuereinrichtung bekannt, die einen Spülgang mit einer Anzahl von Teilprogrammschritten steuert. Nach Ausführung eines der Teilprogrammschritte, etwa dem Klarspülschritt, wird die nicht mehr benötigte Spülflüssigkeit im Flottenspeicher, oder allgemein in einem Speicherbehälter, zwischengespeichert und in einem nachfolgenden Teilprogrammschritt, z. B. dem Vorspülen, wiederverwendet.

Aus der EP 0 669 097 A2 ist ein wasserführendes Haushaltsgerät mit einer Einrichtung zur Wasserrückgewinnung bekannt, welches einen Waschtank umfasst, dem frisches Leitungswasser durch einen normalerweise geschlossenen Wasserzuführkreis zugeführt werden kann, der durch eine Programmsteuerungseinrichtung geöffnet werden kann, um Betriebszyklen auszuführen, die zumindest eine Waschphase und/oder zumindest eine Spülphase umfassen. Dabei kann die Einrichtung zur Wasserrückgewinnung das Wasser von zumindest einer der Phasen zur Wiederverwendung in einem nachfolgenden Zyklus in einem Speicherbehälter speichern, wobei die Einrichtung zur Wasserrückgewinnung ein Rohr mit einer durch die Programmsteuereinrichtung gesteuerten Pumpe umfasst, die Wasser von dem Waschtank in den Speicherbehälter liefern kann. Dabei bildet der Speicherbehälter einen Teil des Wasserzuführkreises, so dass er im Wesentlichen durch die Strömung des frischen Wassers, das in den Waschtank geliefert wird, jedes Mal gespült wird, wenn der Wasserzuführkreis geöffnet ist.

Aus der DE 39 01 169 A1 ist ein Verfahren zur Rückgewinnung von Wärmeenergie aus Arbeitsflüssigkeit einer programmgesteuerten Haushalts-Geschirrspül- oder Waschmaschine bekannt, bei dem die Arbeitsflüssigkeit in einem Arbeitsprogrammabschnitt aufgeheizt wird und in Wärmeaustausch mit bevorratetem Frischwasser gebracht wird, das in einem nachfolgenden Arbeitsprogrammabschnitt in den Arbeitsbehälter abgelassen wird. Dabei wird die erwärmte Arbeitsflüssigkeit erst nach Beendigung des Arbeitsprogrammabschnitts, in dem sie aufgeheizt worden ist, in Wärmeaustausch mit dem Frischwasser gebracht.

Im Laufe der Spülgänge verfettet der Flottenspeicher. Das zusätzliche Absenken von Prozesstemperaturen während der Spülgänge hat außerdem zur Folge, dass sich insbesondere im Sieb- und Pumpentopfbereich eines wasserführenden Haushaltsgeräts fetthaltige Schmutzfilme festsetzen.

Die Aufgabe der Erfindung besteht darin, ein wasserführendes Haushaltsgerät, insbesondere eine Geschirrspül- oder Waschmaschine bereitzustellen, bei dem solche Verschmutzungen bzw. Verfettungen mit einem möglichst geringen Energieaufwand beseitigt werden können.

Die Aufgabe der Erfindung ist durch die Merkmale des Patentanspruches 1 gelöst. Bevorzugte Weiterbildungen der Erfindung sind in den Unteransprüchen offenbart.

Die Erfindung geht aus von einem wasserführenden Haushaltsgerät, insbesondere Geschirrspül- oder Waschmaschine, wenigstens aufweisend ein Heizelement zur Erwärmung von Spülflüssigkeit und einen Speicherbehälter zur Speicherung von Spülflüssigkeit.

Erfindungsgemäß ist vorgesehen, dass ein Speicherbehälter-Reinigungsprogramm vorgesehen ist, bei dem der Speicherbehälter mit durch das Heizelement aufgeheizter Spülflüssigkeit wenigstens zeitweise wenigstens teilweise gefüllt ist. Bei Aktivierung des Reinigungsprogramms wird Spülflüssigkeit während eines vorgegebenen Reinigungszeitintervalls mittels eines Heizelementes erwärmt und in den Speicherbehälter geleitet. Im Reinigungsprogramm wird daher vorrangig der Speicherbehälter mit der aufgeheizten Spülflüssigkeit beaufschlagt, ohne dass die aufgeheizte Spülflüssigkeit in Kontakt mit dem Spülgut kommt und Wärme an das Spülgut abgibt. Aufgrund der hohen Temperaturen der Spülflüssigkeit im Speicherbehälter können daher Fettablagerungen thermisch aufgespaltet und aus dem Speicherbehälter geführt werden.

Vorzugsweise ist vorgesehen, dass das Speicherbehälter-Reinigungsprogramm Bestandteil eines eine Mehrzahl von Teilprogrammschritten umfassenden Spülgangprogramms mit Reinigungswirkung ist. Derartige Spülgangprogramme zur Reinigung von Spülgut können folgende Teilprogrammschritte umfassen: einen Vorspülschritt zur Entfernung grober Anschmutzungen, bei dem üblicherweise keine Aufheizung von Spülflotte erfolgt, einen Reinigungsschritt mit Reinigungsmittelzugabe und Aufheizung von Spülflüssigkeit auf bis zu bspw. 65°C, einen Zwischenspülschritt, üblicherweise ohne Aufheizung von Spülflotte, einen Klarspülschritt mit Klarspülerzugabe und Aufheizung von Spülflüssigkeit auf bis zu bspw. 70°C sowie einen abschließenden Trocknungsschritt zum Trocknen des Spülguts. Davon abweichend können bei Spülgangprogrammen bspw. der Vorspülschritt und/oder der Zwischenspülschritt ausgeblendet sein oder mit Aufheizung von Spülflotte verbunden sein. Das Speicherbehälter-Reinigungsprogramm kann zwischen zwei Teilprogrammschritten, vor dem ersten oder nach dem letzten Teilprogrammschritt vorgesehen sein.

Es ist ferner vorzugsweise vorgesehen, dass das Speicherbehälter-Reinigungsprogramm zuschaltbar oder abschaltbar bei wenigstens einem Spülgangprogramm ist. Dabei kann das Zu- und/oder Abschalten manuell durch eine Bedienperson, bspw. anhand dafür vorgesehener Auswahlschalter, oder automatisch erfolgen, bspw. nach einer vorgegebenen Anzahl von Spülgangprogrammen oder auf Erfassung von Verschmutzung mittels Sensoren erfolgen. Es kann zusätzlich vorgesehen sein, dass die Anzahl von ausgewählten Spülgangsprogrammen mit erhöhter Temperatur im Reinigungsschritt, bspw. mit mindestens 55°C erfasst wird und daraufhin automatisch das Speicherbehälter-Reinigerprogramm ausgeblendet wird.

Außerdem ist vorzugsweise vorgesehen, dass das Speicherbehälter-Reinigungsprogramm unabhängig von anderen Spülgangprogrammen mit Reinigungswirkung auswählbar ist, sodass im Bedarfsfall das Speicherbehälter-Reinigungsprogramm alleine, also nicht in Zusammenhang mit einem Spülgangprogramm betreibbar ist, um bspw. besonderes schwere Verfettungen zu beseitigten, die einen normalen Betrieb mit Reinigungsleistung unmöglichen machen.

In einer bevorzugten Ausführungsform ist vorgesehen, dass nach Beendigung des Speicherbehälter-Reinigungsprogramms der Speicherbehälter wieder entleert ist, so dass Verunreinigungen aus dem Speicherbehälter ausgetragen werden.

In einer weiteren, bevorzugten Ausführungsform ist vorgesehen, dass die während der Speicherbehälter-Reinigung in den Speicherbehälter geleitete Spülflüssigkeit auf eine Temperatur in der Größenordnung von 60 bis 75°C aufgeheizt wird, wodurch Fettablagerungen thermisch aufgespaltet und aus dem Speicherbehälter ausgetragen werden können.

Zur Steigerung der Reinigungseffizienz ist vorzugsweise vorgesehen, das wenigstens zeitweise während des Speicherbehälter-Reinigungsprogramms der Speicherbehälter von Spülflüssigkeit durchströmt ist, insbesondere von einer von einer Eingangsöffnung zu einer Ausgangsöffnung strömenden Spülflüssigkeit. Die Strömungsgeschwindigkeit kann hier derart gewählt werden, dass die an der Innenwandung des Speicherbehälters festgesetzten Schmutzpartikel von der Flüssigkeitsströmung mitgerissen werden können. Bevorzugte Strömungsgeschwindigkeiten im Speicherbehälter liegen bei 20 bis 30 l/min. Zur weiteren Steigerung der Reinigungseffizienz können zusätzliche Strömungsleitelemente, wie etwa Strömungsrippen, im Speicherbehälter vorgesehen sein, wodurch sich eine reinigungstechnisch günstige turbulente Strömung im Speicherbehälter ergibt.

Vorzugsweise ist vorgesehen, dass wenigstens zeitweise während des Speicherbehälter-Reinigungsprogramms der Speicherbehälter, insbesondere über eine Ausgangsöffnung, strömungstechnisch mit einem Spülraum eines Spülbehälters des Haushaltsgerätes verbunden ist. So kann während der Speicherbehälter-Reinigung der Speicherbehälter von der Spülflüssigkeit durchspült werden und Spülflüssigkeit über eine Ausgangsöffnung in den Spülbehälter geführt werden. Die Ausgangsöffnung des Speicherbehälters kann über eine zusätzliche, z. B. externe, Rücklaufleitung mit dem Spülbehälter verbunden sein, die in den Spülraum des Spülbehälters der Geschirrspülmaschine einmünden kann.

Hierzu ist vorzugsweise wenigstens zeitweise während des Speicherbehälter-Reinigungsprogramms die Ausgangsöffnung des Speicherbehälters über eine Rücklaufleitung mit dem Spülbehälter verbunden ist.

In einer weiteren, bevorzugten Ausführungsform ist vorgesehen, dass die Ausgangsöffnung eine Be- und Entlüftungsöffnung des Speicherbehälters ist, die unmittelbar in den Spülraum des Spülbehälters mündet. So ist ein besonders einfacher Aufbau möglich.

Ferner ist vorzugsweise vorgesehen, dass nach Ausführung eines der Teilprogrammschritte, insbesondere eines Klarspülschrittes, die nicht mehr benötigte Spülflüssigkeit im Speicherbehälter zwischengespeichert ist. So kann eine Wassereinsparung durch die Wiederverwendung von Spülflüssigkeit erreicht werden.

Außerdem ist vorzugsweise vorgesehen, dass in einem ersten Umwälzkreislauf zur Durchführung des Spülganges zumindest eine Sprüheinrichtung zur Beaufschlagung von Spülgut mit der Spülflüssigkeit auf das Spülgut integriert ist.

Weiter ist vorzugsweise vorgesehen, dass wenigstens zeitweise während des Speicherbehälter-Reinigungsprogramm Spülflüssigkeit in einem zweiten Umwälzkreislauf zirkuliert, in dem Spülflüssigkeit vorbei an Spülgut, insbesondere von einem Pumpentopfbereich des Spülbehälters über eine Umwälzleitung in den Speicherbehälter und wieder zurück in den Pumpentopfbereich führbar ist. Es ist also neben dem ersten Umwälzkreislauf zur Reinigung von Spülgut ein zweiter Umwälzkreislauf vorgesehen, der nur der Speicherbehälterreinigung dient und so eine besonders energiesparende Reinigung des Speicherbehälters erlaubt, da es zu keiner Erwärmung von Spülgut kommt.

Dabei ist vorzugsweise vorgesehen, dass der zweite Umwälzkreislauf einen Bypass aufweist zur Reduzierung der Durchflussmenge der durch den Speicherbehälter strömenden Spülflüssigkeit. Alternativ kann auch die Leistung der Umwälzpumpe reduziert werden, insbesondere soweit, dass im Wesentlichen keine Spülflüssigkeit aus den Sprüheinrichtungen austritt und somit keine Beaufschlagung des Spülgutes mit Spülflotte erfolgt. Ferner kann parallel hierzu bei reduzierter Durchflussmenge die Heizleistung des Durchlauferhitzers reduziert werden.

Erfindungsgemäß ist vorgesehen, dass wenigstens zeitweise während des Speicherbehälter-Reinigungsprogramms Spülflüssigkeit entlang einer Seitenwand des Spülbehälters in den Pumpentopf strömt. So ist sichergestellt, dass auch bei in Geschirrkörben angeordnetem Spülgut es zu keiner Erwärmung des Spülgutes durch Beaufschlagung mit Spülflüssigkeit kommt und so ein besonders energiesparendes Speicherbehälter-Reinigungsprogramm zur Verfügung steht.

Vorzugsweise ist vorgesehen, dass der erste Umwälzkreislauf während des Speicherbehälter-Reinigungsprogramms teilweise oder vollständig unterbrochen ist, und Spülflüssigkeit in den Speicherbehälter strömt. Die im ersten Umwälzkreislauf umgewälzte Spülflüssigkeit kann dann anstelle dessen in den Speicherbehälter geleitet werden. Auf diese Weise kann dieselbe Spülflüssigkeitsmenge sowohl während des normalen Spülganges als auch während des Reinigungszeitintervalls eingesetzt werden, in dem der Speicherbehälter gereinigt wird.

Besonders bevorzugt ist es, wenn das Reinigungszeitintervall während, insbesondere zu Beginn des Reinigungsschrittes des Spülganges gestartet wird, da in diesem Fall die Spülflüssigkeit sowohl bei hoher Temperatur als auch unter Zugabe eines Reinigungsmittels im Einsatz ist.

Ferner ist vorzugsweise vorgesehen, dass das Speicherbehälter-Reinigungsprogramm vor einem Reinigungsschritt eines Spülgangprogramms des Spülgangs vorgesehen ist, bei dem aufgeheizte, insbesondere auf 55 bis 65°C aufgeheizte Spülflüssigkeit auf Spülgut aufgebracht wird. Dabei handelt es sich um ein besonders energiesparendes Speicherbehälter-Reinigungsprogramm, bei dem der Spülbehälter durch das Speicherbehälter-Reinigungsprogramm vorgewärmt ist, so dass sich eine Mischungstemperatur nach dem erneuten Befüllen mit Spülflüssigkeit einstellt.

Hierbei ist vorzugsweise vorgesehen, dass der Reinigungsschritt des Spülgangprogramms einen Nachfüllschritt aufweist, in dem die Spülflüssigkeitsmenge erhöht wird. Dies kann bspw. durch Zugabe von Frischwasser aus einem hausseitigen Versorgungsnetz oder aus einem weiteren Flüssigkeitsspeicher des wasserführenden Haushaltsgeräts erfolgen, wobei bspw. eine Menge von 1 Liter nachgefüllt wird.

Schließlich ist vorzugsweise vorgesehen, dass während des Speicherbehälter-Reinigungsprogramms Spülflüssigkeit mit einer Strömungsgeschwindigkeit in einer Größenordnung von 20 bis 30 l/min. den Speicherbehälter durchströmt, so dass ein effektiver Abtrag von Fettablagerungen gewährleistet ist.

Nachfolgend ist ein Ausführungsbeispiel der Erfindung anhand der beigefügten Figuren beschrieben.

Es zeigen:
- Fig. 1: in einem schematischen Block-Diagramm eine Geschirrspülmaschine zur Durchführung des erfindungsgemäßen Spülverfahrens;
- Fig. 2: eine Ansicht entsprechend der Fig. 1 mit aktiviertem zweiten Umwälzkreislauf zur Speicherbehälter-Reinigung;
- Fig. 3: ein Temperatur-Zeitdiagramm bezogen auf den Spülraum der Geschirrspülmaschine; und
- Fig. 4: ein Temperatur-Zeit-Diagramm entsprechend der Fig. 3 sowie bezogen auf den Speicherbehälter der Geschirrspülmaschine.

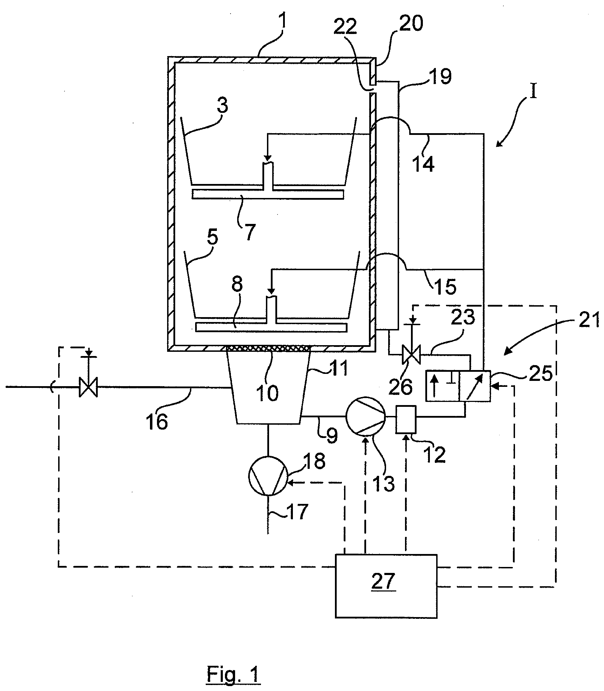

In der Fig. 1 ist schematisch als Ausführungsbeispiel für wasserführendes Haushaltsgeräte eine Geschirrspülmaschine mit einem, einen Spülraum begrenzenden Spülbehälter 1 gezeigt. Im Spülraum des Spülbehälters 1 kann ein nicht dargestelltes, zu reinigendes Spülgut in Geschirrkörben 3, 5 angeordnet werden. Im gezeigten Spülbehälter 1 sind beispielhaft zwei, in unterschiedlichen Sprühebenen vorgesehene Sprüharme 7, 8 angeordnet, über die das Spülgut mit Spülflüssigkeit beaufschlagt wird. Im Spülbehälterboden ist ein Pumpentopf 11 mit einer nur grob angedeuteten Siebanordnung 10 vorgesehen. Vom Pumpentopf 11 ist eine Umwälzleitung 9 mit darin angeordneter Umwälzpumpe 13 weggeführt. Die Umwälzleitung 9 ist über Zuleitungen 14, 15 strömungstechnisch mit den Sprüharmen 7, 8 verbunden. Der Umwälzpumpe 13 nachgeschaltet ist ein, als Wasserheizung bezeichnetes Heizelement, etwa ein Durchlauferhitzer.

Der Pumpentopf 11 ist außerdem über Anschlussstutzen mit einer, mit dem Wasserversorgungsnetz gekoppelten Frischwasser-Zuleitung 16 sowie mit einer Ablaufleitung 17 in Verbindung, in der eine Laugenpumpe 18 zum Abpumpen von Spülflüssigkeit aus dem Spülbehälter 1 angeordnet ist. Der Spülbehälter 1 weist an seiner, in der Fig. 1 rechten Seite als Speicherbehälter 19 einen sogenannten Flottenspeicher auf, der nach Art eines Wärmetauschers thermisch gekoppelt in Anlage mit einer Seitenwand 20 des Spülbehälters 1 ist. In dem Flottenspeicher 19 kann Spülflüssigkeit zwischengespeichert werden, die nach Ausführung eines Teilprogrammschrittes eines Spülganges bzw. eines Spülzyklus nicht mehr benötigt wird. Der Flottenspeicher 19 ist in seinem oberen Bereich über eine Be- und Entlüftungsöffnung 22 strömungstechnisch in Verbindung mit dem Spülraum.

In einem ersten herkömmlichen Umwälzkreislauf I der Geschirrspülmaschine zur Durchführung später beschriebener Teilprogrammschritte des Spülganges sind unter anderem der Pumpentopf 11 mit zugeordneter Siebanordnung 10, die Umwälzleitung 9, die Zuleitungen 14, 15 sowie die beiden Sprüharme 7, 8 integriert.

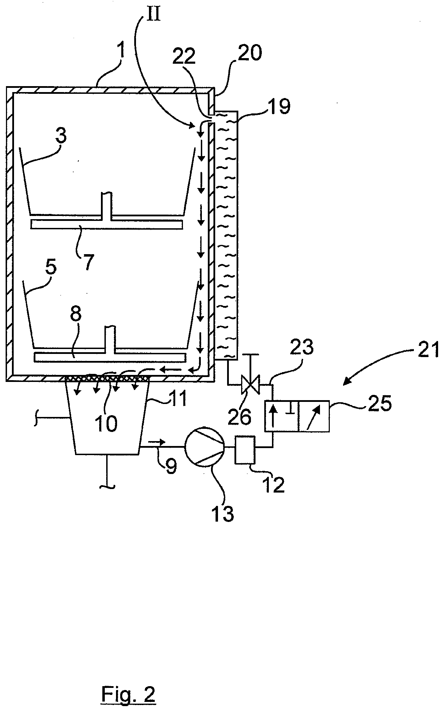

Der Flottenspeicher 19 ist demgegenüber nicht in dem ersten Hydraulikkreislauf I integriert. Vielmehr ist stromab des Heizelementes 12 in der Umwälzleitung 9 eine Verzweigungsstelle 21 vorgesehen, an der eine Verbindungsleitung 23 abzweigt, die an eine Eingangsöffnung des Flottenspeichers 19 angeschlossen ist. In der Verzweigungsstelle 21 ist eine als Drei-Wege-Schaltventil 25 ausgebildete Wasserweiche vorgesehen. Das Drei-Wege-Schaltventil 25 verbindet in einer in der Fig. 2 gezeigten Schaltstellung die Umwälzleitung 9 mit der, zum Flottenspeicher 19 führenden Verbindungsleitung 23 und unterbricht den Strömungsweg zu den Zuleitungen 14, 15.

In der in der Fig. 1 gezeigten Schaltstellung des Drei-Wege-Schaltventils 25 ist dagegen die Verbindung zum Flottenspeicher 19 unterbrochen und die Umwälzleitung 9 mit den Zuleitungen 14, 15 verbunden. In dieser Schaltstellung des Drei-Wege-Schaltventils 25 kann daher die Spülflüssigkeit im ersten Umwälzkreislauf I der Geschirrspülmaschine zirkuliert werden. Demgegenüber kann im zweiten Umwälzkreislauf II gemäß der Fig. 2 die Spülflüssigkeit über die nicht näher gezeigte Eingangsöffnung in den Flottenspeicher 19 gepumpt werden und diesen füllen, bis die Spülflüssigkeit über die Be- und Entlüftungsöffnung 22 in den Spülbehälter 1 eintritt und entlang der Spülbehälterwand 20 vorbei an den Geschirrkörben 3, 5 wieder in den Pumpentopf 11 mit zugeordneter Siebanordnung 10 rückgeführt wird. Je nach Schaltstellung des Drei-Wege-Schaltventils 25 kann daher die Spülflüssigkeit entweder im ersten Umwälzkreislauf I (Fig. 1) oder im zweiten Umwälzkreislauf II (Fig. 2) umgewälzt werden.

In der zum Flottenspeicher 19 führenden Verbindungsleitung 23 ist außerdem ein Sperrventil 26 angeordnet, das während des zweiten Umwälzkreislaufes II in seiner OffenStellung angeordnet ist.

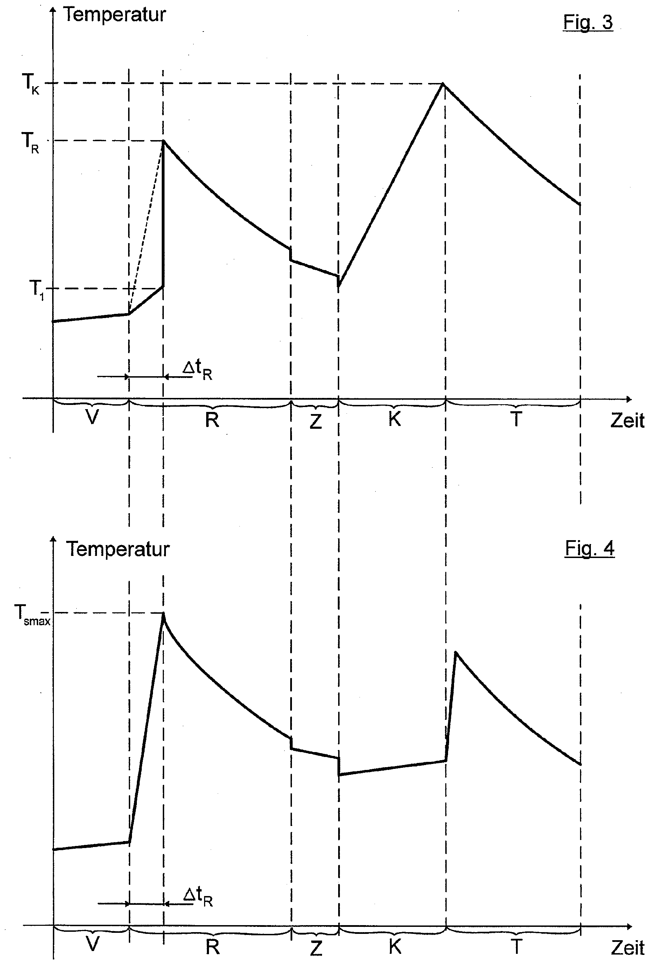

In der Fig. 3 ist ein Spülprogrammablauf der Geschirrspülmaschine anhand eines Temperatur-Zeit-Diagrammes gezeigt.

Das Temperatur-Zeit-Diagramm der Fig. 3 betrifft den zeitlichen Verlauf einer Mischungstemperatur, die sich aus den Temperaturen der im Spülraum befindlichen Spülflüssigkeit, der Spülbehältertemperatur und der Spülguttemperatur ergibt. Demgegenüber betrifft das in der Fig. 4 gezeigte Temperatur-Zeit-Diagramm eine Mischungstemperatur, die sich aufgrund der Temperaturen des thermisch mit dem Spülbehälter 1 gekoppelten Flottenspeichers 9 sowie einer gegebenenfalls im Flottenspeicher 19 vorhandenen Spülflüssigkeit ergibt.

Der gemäß den Fig. 3 und 4 veranschaulichte Programmablauf weist die einzelnen Teilprogrammschritte eines Spülganges, nämlich Vorspülen V, Reinigen R, Zwischenspülen Z, Klarspülen K sowie Trocknen T auf. Diese Teilprogrammschritte werden mittels einer Steuereinrichtung 27 durch entsprechende Ansteuerung der Gerätekomponenten ausgeführt.

Der Spülgang wird mit dem Vorspülschritt V gestartet, bei dem eine im Flottenspeicher 19 zwischengespeicherte Klarspülwassermenge vom vorangegangenen Spülgang in den Pumpentopfbereich des Spülbehälters 1 eingelassen wird. Hierzu wird das Sperrventil 26 geöffnet und das Drei-Wege-Ventil 25 in die in der Fig. 2 gezeigte Stellung geschaltet. Die zwischengespeicherte Klarspülmenge kann daher unter Schwerkraftwirkung in den Pumpentopfbereich des Spülbehälters 1 einströmen. Anschließend wird das Drei-Wege-Schaltventil 25 in seine in der Fig. 1 gezeigte Schaltstellung geschaltet sowie die Umwälzpumpe 13 gestartet, wodurch das Klarspülwasser im ersten Umwälzkreislauf I zirkulieren kann. Nach Ausführung des Vorspülschrittes V wird die gebrauchte Spülflüssigkeit mittels der Laugenpumpe 18 abgepumpt und anschließend Frischwasser für den folgenden Reinigungsschritt R in den Pumpentopfbereich zugeführt.

Vor dem Reinigungsschritt R wird das Speicherbehälter-Reinigungsprogramm durchgeführt, in dem der Flottenspeicher 19 mit der für den Reinigungsschritt R erforderlichen Spülflüssigkeit gereinigt wird. Während des Speicherbehälter-Reinigungsprogramms befindet sich das Drei-Wege-Schaltventil 25 in der, in der Fig. 2 gezeigten Schaltstellung und ist das Sperrventil 26 geöffnet. Entsprechend ist der erste Umwälzkreislauf I zur Beaufschlagung des Spülgutes mit Spülflüssigkeit unterbrochen. Die Spülflüssigkeit wird vielmehr mittels der Umwälzpumpe 13 im zweiten Umwälzkreislauf II zirkuliert, in dem die Spülflüssigkeit in großer Strömungsgeschwindigkeit den Flottenspeicher 19 durchströmt und über die Be- und Entlüftungsöffnung 22 entlang der Spülbehälter-Seitenwand 20 wieder zurück in den Pumpentopfbereich strömt.

Gleichzeitig wird im zweiten Umwälzkreislauf die Spülflüssigkeit auf Temperaturen in der Größenordnung von 70°C aufgeheizt, wodurch sich Schmutzpartikel im Umwälzkreislauf II, das heißt insbesondere im Flottenspeicher 19 sowie im Pumpentopf 11 und der zugeordneten Siebanordnung 10 lösen und ausgetragen werden können. Entsprechend steigt gemäß dem Diagramm der Fig. 2 während des Speicherbehälter-Reinigungsprogramms die Temperatur T_{S} im Flottenspeicher 19 auf ca. 70°C. Das Spülgut sowie der Spülbehälter 1 wird daher im zweiten Umwälzkreislauf II - mit Ausnahme der Spülbehälter-Seitenwand 20 - nicht bzw. kaum aufgeheizt. Aufgrund der thermischen Kopplung mit dem Flottenspeicher 19 erwärmt sich der Spülraum lediglich geringfügig auf eine Temperatur T₁, wie es in der Fig. 3 gezeigt ist.

Nach dem Ende des Speicherbehälter-Reinigungsprogramms wird der erste Hydraulikkreislauf I in Betrieb genommen. Das heißt, im nun folgenden Reinigungsschritt wird das Drei-Wege-Schaltventil 25 in die in der Fig. 1 gezeigte Schaltstellung gebracht, in der die auf 70°C aufgeheizte Spülflüssigkeit über die Zuleitungen 14, 15 und den daran gekoppelten Sprüharmen 7, 8 das Spülgut beaufschlagt. Aufgrund der nunmehr im ersten Hydraulikkreislauf I zirkulierenden Spülflüssigkeit stellt sich im Spülraum eine Reinigungstemperatur T_{R} von etwa 50°C ein. Die Spülflüssigkeit ist hierfür während der Flottenspeicher-Reinigung so aufzuheizen, dass sich nach dem Umschalten auf den ersten Umwälzkreislauf I eine Reinigungstemperatur im Spülraum ergibt, die in der Größenordnung von 50 bis 55°C liegt.

Nach der Ausführung des Reinigungsschrittes R wird die nicht mehr benötigte Spülflüssigkeit abgepumpt und für den folgenden Zwischenspülschritt Z erneut Frischwasser zugeführt, das nach Ausführung des Zwischenspülschrittes Z ebenfalls wieder abgepumpt wird.

Für den anschließenden Klarspülschritt K wird erneut Frischwasser zugeführt und auf eine Klarspültemperatur T_{K} aufgeheizt. Zum Ende des Klarspülschrittes wird die aufgeheizte Spülflüssigkeit aus dem Spülbehälter gepumpt, woraufhin der Trocknungsschritt T beginnt.

Im Trocknungsschritt T trocknet das Spülgut aufgrund seiner Eigenwärme nach dem bekannten Kondensationsprinzip, bei dem die mit Feuchtigkeit beladene Luft an den Seitenwänden des Spülbehälters 1 kondensieren kann. Die nach Ausführung des Klarspülschrittes K nicht mehr benötigte Spülflüssigkeit wird nicht in das Abwassersystem geleitet, sondern im Flottenspeicher 19 zwischengespeichert. Die zwischengespeicherte Spülflüssigkeitsmenge kann dann im nächsten Spülgang bzw. Spülzyklus im Vorspülschritt V eingesetzt werden.

### BEZUGSZEICHENLISTE

- 1: Spülbehälter
- 3: Geschirrkorb
- 5: Geschirrkorb
- 7,8: Sprüharme
- 9: Umwälzleitung
- 10: Siebanordnung
- 11: Pumpentopf
- 12: Heizelement
- 13: Umwälzpumpe
- 14: Zuleitung
- 15: Zuleitung
- 16: Frischwasser-Zuleitung
- 17: Ablaufleitung
- 18: Laugenpumpe
- 19: Speicherbehälter
- 20: Spülbehälter-Seitenwand
- 21: Verzweigungsstelle
- 22: Ausgangsöffnung
- 23: Verbindungsleitung
- 25: Drei-Wege-Schaltventil
- 27: Steuereinrichtung
- V: Vorspülen
- R: Reinigen
- Z: Zwischenspülen
- K: Klarspülen
- T: Trocknen
- T_{S}, Tₛₘₐₓ: Flottenspeicher-Temperatur
- T_{R}: Reinigungstemperatur
- Δt_{R}: Reinigungszeitintervall
- I: erster Umwälzkreislauf
- II: zweiter Umwälzkreislauf

## Patentansprüche

1. Wasserführendes Haushaltsgerät, insbesondere Geschirrspül- oder Waschmaschine, wenigstens aufweisend ein Heizelement (12) zur Erwärmung von Spülflüssigkeit und einen Speicherbehälter (19) zur Speicherung von Spülflüssigkeit, **dadurch gekennzeichnet, dass** ein Speicherbehälter-Reinigungsprogramm vorgesehen ist, bei dem der Speicherbehälter (19) mit durch das Heizelement (12) aufgeheizter Spülflüssigkeit wenigstens zeitweise wenigstens teilweise gefüllt ist und während dessen wenigstens zeitweise Spülflüssigkeit entlang einer Seitenwand (20) eines Spülbehälters (1) in einen Pumpentopf (11) strömt.

2. Wasserführendes Haushaltsgerät nach Anspruch 1, **dadurch gekennzeichnet, dass** das Speicherbehälter-Reinigungsprogramm Bestandteil eines eine Mehrzahl von Teilprogrammschritten umfassenden Spülgangprogramms mit Reinigungswirkung ist.

3. Wasserführendes Haushaltsgerät nach Anspruch 2, **dadurch gekennzeichnet, dass** das Speicherbehälter-Reinigungsprogramm zuschaltbar oder abschaltbar bei wenigstens einem Spülgangprogramm ist.

4. Wasserführendes Haushaltsgerät nach einem der Ansprüche 1 bis 3, **dadurch gekennzeichnet, dass** das Speicherbehälter-Reinigungsprogramm unabhängig von anderen Spülgangprogrammen mit Reinigungswirkung auswählbar ist.

5. Wasserführendes Haushaltsgerät nach einem der Ansprüche 1 bis 4, **dadurch gekennzeichnet, dass** nach Beendigung des Speicherbehälter-Reinigungsprogramms der Speicherbehälter (19) entleert ist.

6. Wasserführendes Haushaltsgerät nach einem der vorhergehenden Ansprüche, **dadurch gekennzeichnet, dass** während des Speicherbehälter-Reinigungsprogramms Spülflüssigkeit im Speicherbehälter (19) wenigstens zeitweise eine Temperatur von 60 bis 75°C aufweist.

7. Wasserführendes Haushaltsgerät nach einem der vorhergehenden Ansprüche, **dadurch gekennzeichnet, dass** wenigstens zeitweise während des Speicherbehälter-Reinigungsprogramms der Speicherbehälter (19) von Spülflüssigkeit durchströmt ist, insbesondere von einer von einer Eingangsöffnung zu einer Ausgangsöffnung (22) strömenden Spülflüssigkeit.

8. Wasserführendes Haushaltsgerät nach einem der vorhergehenden Ansprüche, **dadurch gekennzeichnet, dass** wenigstens zeitweise während des Speicherbehälter-Reinigungsprogramms der Speicherbehälter (19), insbesondere über eine Ausgangsöffnung (22), strömungstechnisch mit einem Spülraum eines Spülbehälters (1) des Haushaltsgerätes verbunden ist.

9. Wasserführendes Haushaltsgerät nach Anspruch 8, **dadurch gekennzeichnet, dass** wenigstens zeitweise während des Speicherbehälter-Reinigungsprogramms die Ausgangsöffnung (22) des Speicherbehälters (19) über eine Rücklaufleitung mit dem Spülbehälter (1) verbunden ist.

10. Wasserführendes Haushaltsgerät nach einem der Ansprüche 7 bis 9, **dadurch gekennzeichnet, dass** die Ausgangsöffnung (22) eine Be- und Entlüftungsöffnung des Speicherbehälters (19) ist, die unmittelbar in den Spülraum des Spülbehälters (1) mündet.

11. Wasserführendes Haushaltsgerät nach einem der Ansprüche 2 bis 10, **dadurch gekennzeichnet, dass** nach Ausführung eines der Teilprogrammschritte, insbesondere eines Klarspülschrittes (K), die nicht mehr benötigte Spülflüssigkeit im Speicherbehälter (19) zwischengespeichert ist.

12. Wasserführendes Haushaltsgerät nach einem der vorhergehenden Ansprüche, **dadurch gekennzeichnet, dass** in einem ersten Umwälzkreislauf (I) zur Durchführung des Spülganges zumindest eine Sprüheinrichtung (7, 8) zur Beaufschlagung von Spülgut mit der Spülflüssigkeit auf das Spülgut integriert ist.

13. Wasserführendes Haushaltsgerät nach Anspruch 12, **dadurch gekennzeichnet, dass** wenigstens zeitweise während des Speicherbehälter-Reinigungsprogramm Spülflüssigkeit in einem zweiten Umwälzkreislauf (II) zirkuliert, in dem Spülflüssigkeit vorbei an Spülgut, insbesondere von einem Pumpentopfbereich des Spülbehälters (1) über eine Umwälzleitung (9) in den Speicherbehälter (19) und wieder zurück in den Pumpentopfbereich führbar ist.

14. Wasserführendes Haushaltsgerät nach Anspruch 13, **dadurch gekennzeichnet, dass** der zweite Umwälzkreislauf (II) einen Bypass aufweist zur Reduzierung der Durchflussmenge der durch den Speicherbehälter (19) strömenden Spülflüssigkeit.

15. Wasserführendes Haushaltsgerät nach einem der Ansprüche 13 oder 14, **dadurch gekennzeichnet, dass** der erste Umwälzkreislauf (I) während des Speicherbehälter-Reinigungsprogramms teilweise oder vollständig unterbrochen ist, und Spülflüssigkeit in den Speicherbehälter (19) strömt.

16. Wasserführendes Haushaltsgerät nach einem Ansprüche 2 bis 15, **dadurch gekennzeichnet, dass** das Speicherbehälter-Reinigungsprogramm vor einem Reinigungsschritt eines Spülgangprogramms (R) des Spülgangs vorgesehen ist, bei dem aufgeheizte, insbesondere auf 55 bis 65°C aufgeheizte Spülflüssigkeit auf Spülgut aufgebracht wird.

17. Wasserführendes Haushaltsgerät nach Anspruch 16, **dadurch gekennzeichnet, dass** der Reinigungsschritt des Spülgangprogramms (R) einen Nachfüllschritt aufweist, in dem die Spülflüssigkeitsmenge erhöht wird.

18. Wasserführendes Haushaltsgerät nach einem der vorhergehenden Ansprüche, **dadurch gekennzeichnet, dass** während des Speicherbehälter-Reinigungsprogramms Spülflüssigkeit mit einer Strömungsgeschwindigkeit in einer Größenordnung von 20 bis 30 l/min. den Speicherbehälter (19) durchströmt.

## Claims

1. Water-conducting household appliance, in particular dishwasher or washing machine, at least comprising a heating element (12) for heating washing liquid and a reservoir (19) for storing washing liquid, **characterised in that** a reservoir cleaning program is provided in which the reservoir (19) is at least temporarily and at least partially filled with washing liquid heated by the heating element (12) and during which at least temporarily washing liquid flows along a side wall (20) of a washing container (1) into a sump (11).

2. Water-conducting household appliance according to claim 1, **characterised in that** the reservoir cleaning program is part of a washing program with cleaning effect comprising a number of subprogram steps.

3. Water-conducting household appliance according to claim 2, **characterised in that** the reservoir cleaning program can be switched on or off in at least one washing program.

4. Water-conducting household appliance according to one of claims 1 to 3, **characterised in that** the reservoir cleaning program can be selected independently of other washing programs with cleaning effect.

5. Water-conducting household appliance according to one of claims 1 to 4, **characterised in that** after completion of the reservoir cleaning program the reservoir (19) is emptied.

6. Water-conducting household appliance according to one of the preceding claims, **characterised in that** during the reservoir cleaning program washing liquid in the reservoir (19) at least temporarily has a temperature of 60 to 75°C.

7. Water-conducting household appliance according to one of the preceding claims, **characterised in that** at least temporarily during the reservoir cleaning program washing liquid flows through the reservoir (19), in particular that washing liquid flows from an inlet opening to an outlet opening (22).

8. Water-conducting household appliance according to one of the preceding claims, **characterised in that** at least temporarily during the reservoir cleaning program the reservoir (19) is connected fluidically to a dishwasher interior of a washing container (1) of the household appliance, in particular via an outlet opening (22).

9. Water-conducting household appliance according to claim 8, **characterised in that** at least temporarily during the reservoir cleaning program the outlet opening (22) of the reservoir (19) is connected to the washing container (1) via a return pipe.

10. Water-conducting household appliance according to one of claims 7 to 9, **characterised in that** the outlet opening (22) is a ventilation opening of the reservoir (19), which flows directly into the dishwasher interior of the washing container (1).

11. Water-conducting household appliance according to one of claims 2 to 10, **characterised in that** after performance of one of the subprogram steps, in particular a rinsing step (K), the washing liquid no longer required is temporarily stored in the reservoir (19).

12. Water-conducting household appliance according to one of the preceding claims, **characterised in that** in a first circulation loop (I) for performance of the wash cycle at least one spray device (7, 8) for the application of washing liquid to the items to be washed is integrated.

13. Water-conducting household appliance according to claim 12, **characterised in that** at least temporarily during the reservoir cleaning program washing liquid circulates in a second circulation loop (II), in which the washing liquid can be fed past the items to be washed, in particular from a sump area of the washing container (1) via a circulation line (9) to the reservoir (19) and back again into the sump area.

14. Water-conducting household appliance according to claim 13, **characterised in that** the second circulation loop (II) has a bypass to reduce the flow rate of the washing liquid flowing through the reservoir (19).

15. Water-conducting household appliance according to one of claims 13 or 14, **characterised in that** the first circulation loop (I) during the reservoir cleaning program is partially or fully interrupted and washing liquid flows into the reservoir (19).

16. Water-conducting household appliance according to one of claims 2 to 15, **characterised in that** the reservoir cleaning program is provided before a cleaning step of a washing program (R) of the wash cycle, in which heated washing liquid, in particular heated to 55 to 65°C, is applied to items to be washed.

17. Water-conducting household appliance according to claim 16, **characterised in that** the cleaning step of the washing program (R) has a refilling step in which the volume of washing liquid is increased.

18. Water-conducting household appliance according to one of the preceding claims, **characterised in that** during the reservoir cleaning program washing liquid with a flow rate in the order of 20 to 30 l/min. flows through the reservoir (19).

## Revendications

1. Appareil ménager à circulation d'eau, notamment lave-vaisselle ou lave-linge, présentant au moins un élément de chauffage (12) destiné à échauffer du liquide de lavage, et une cuve de stockage (19) destinée à stocker du liquide de lavage,
**caractérisé en ce qu'**
un programme de nettoyage de cuve de stockage est ménagé, pendant lequel la cuve de stockage (19) est remplie au moins en partie, au moins temporairement, avec du liquide de lavage échauffé par l'élément de chauffage (12) et au cours duquel du liquide de lavage s'écoule dans un puisard (11) au moins temporairement le long d'une paroi latérale (20) d'une cuve de lavage (1).

2. Appareil ménager à circulation d'eau selon la revendication 1, **caractérisé en ce que** le programme de nettoyage de cuve de stockage fait partie d'un programme à cycle de lavage à action nettoyante, comprenant une pluralité d'étapes partielles de programme.

3. Appareil ménager à circulation d'eau selon la revendication 2, **caractérisé en ce que** le programme de nettoyage de cuve de stockage peut être commuté ou arrêté pendant au moins un programme à cycle de lavage.

4. Appareil ménager à circulation d'eau selon l'une quelconque des revendications 1 à 3, **caractérisé en ce que** le programme de nettoyage de cuve de stockage est sélectionnable indépendamment d'autres programmes à cycle de lavage à action nettoyante.

5. Appareil ménager à circulation d'eau selon l'une quelconque des revendications 1 à 4, **caractérisé en ce qu'**après l'achèvement du programme de nettoyage de cuve de stockage, la cuve de stockage (19) est vidée.

6. Appareil ménager à circulation d'eau selon l'une quelconque des revendications précédentes, **caractérisé en ce que** pendant le programme de nettoyage de cuve de stockage, le liquide de lavage dans la cuve de stockage (19) présente au moins temporairement une température de 60 à 75°C.

7. Appareil ménager à circulation d'eau selon l'une quelconque des revendications précédentes, **caractérisé en ce qu'**au moins temporairement pendant le programme de nettoyage de cuve de stockage, la cuve de stockage (19) est traversée par du liquide de lavage, notamment par un liquide de lavage circulant d'une ouverture d'entrée vers une ouverture de sortie (22).

8. Appareil ménager à circulation d'eau selon l'une quelconque des revendications précédentes, **caractérisé en ce qu'**au moins temporairement pendant le programme de nettoyage de cuve de stockage, la cuve de stockage (19) est reliée, du point de vue écoulement, à une chambre de lavage d'une cuve de lavage (1) de l'appareil ménager, notamment par l'intermédiaire d'une ouverture de sortie (22).

9. Appareil ménager à circulation d'eau selon la revendication 8, **caractérisé en ce qu'**au moins temporairement pendant le programme de nettoyage de cuve de stockage, l'ouverture de sortie (22) de la cuve de stockage (19) est reliée à la cuve de lavage (1) par l'intermédiaire d'une conduite de retour.

10. Appareil ménager à circulation d'eau selon l'une quelconque des revendications 7 à 9, **caractérisé en ce que** l'ouverture de sortie (22) est une ouverture d'aération et de ventilation de la cuve de stockage (19), laquelle débouche directement dans la chambre de lavage de la cuve de lavage (1).

11. Appareil ménager à circulation d'eau selon l'une quelconque des revendications 2 à 10, **caractérisé en ce qu'**après l'exécution de l'une des étapes partielles de programme, notamment d'une étape de rinçage (K), le liquide de lavage qui n'est plus nécessaire est stocké provisoirement dans la cuve de stockage (19).

12. Appareil ménager à circulation d'eau selon l'une quelconque des revendications précédentes, **caractérisé en ce qu'**au moins un dispositif d'arrosage (7, 8) destiné à alimenter des produits à laver avec le liquide de lavage par arrosage des produits à laver est intégré dans un premier circuit de circulation (I) pour la réalisation du cycle de lavage.

13. Appareil ménager à circulation d'eau selon la revendication 12, **caractérisé en ce qu'**au moins temporairement pendant le programme de nettoyage de cuve de stockage, du liquide de lavage circule dans un deuxième circuit de circulation (II) dans lequel le liquide de lavage peut être guidé en passant devant les produits à laver, notamment d'une zone de puisard de la cuve de lavage (1) pour être amené dans la cuve de stockage (19) par l'intermédiaire d'une conduite de circulation (9), et être ramené de nouveau dans la zone de puisard.

14. Appareil ménager à circulation d'eau selon la revendication 13, **caractérisé en ce que** le deuxième circuit de circulation (II) présente un bypass destiné à réduire le débit du liquide de lavage s'écoulant à travers la cuve de stockage (19).

15. Appareil ménager à circulation d'eau selon l'une des revendications 13 ou 14, **caractérisé en ce que** le premier circuit de circulation (I) est partiellement ou totalement interrompu pendant le programme de nettoyage de cuve de stockage, et **en ce que** du liquide de lavage s'écoule dans la cuve de stockage (19).

16. Appareil ménager à circulation d'eau selon l'une quelconque des revendications 2 à 15, **caractérisé en ce que** le programme de nettoyage de cuve de stockage est ménagé avant une étape de nettoyage d'un programme à cycle de lavage (R) du cycle de lavage, pendant laquelle le liquide de lavage échauffé notamment de 55 à 65°C est appliqué sur les produits à laver.

17. Appareil ménager à circulation d'eau selon la revendication 16, **caractérisé en ce que** l'étape de nettoyage du cycle de lavage (R) présente une étape de remplissage pendant laquelle la quantité de liquide de lavage est augmentée.

18. Appareil ménager à circulation d'eau selon l'une quelconque des revendications précédentes, **caractérisé en ce que** pendant le programme de nettoyage de cuve de stockage, le liquide de lavage traverse la cuve de stockage (19) avec une vitesse d'écoulement dans l'ordre de 20 à 30 l/min.
